# EUROPEAN PATENT APPLICATION

(11) **EP 2 889 154 A1**
(43) Date of publication of application: **01.07.2015**
(21) Application number: 14171835.3
(22) Date of filing: 10.06.2014
(51) Int. Cl.: B43K 7/12, B43K 24/08, B43K 29/02, B43K 7/00

(54) **Gel-ink pen capable of erasing handwriting**

(30) Priority: 31.12.2013 CN 201320887863 U
(71) Applicant: Shanghai Lees Manufacturing Co., Ltd., Min Hang District Shanghai (CN)
(72) Inventor: Li, Lei Xin, Min Hang District Shanghai (CN)
(74) Representative: Brown, David Leslie

(57) **Abstract**

A gel-ink pen capable of erasing handwriting comprises a pen holder, in which a pen refill with a pen tip is disposed, the pen tip capable of extending out of the head portion of the pen holder for writing, and a rubber head capable of erasing handwriting provided at the side of the head portion of the pen holder near the pen tip. The gel-ink pen further comprises a button for controlling the pen tip of the gel-ink pen to protrude out of and retract into the pen holder, and the button is disposed at a tail portion of the pen holder or on the pen holder. The pen holder comprises an upper pen holder and a lower pen holder, and the button is disposed on the lower pen holder. In the gel-ink pen capable of erasing handwriting according to the invention, the rubber head is provided at the side of the head portion of the pen holder near the pen tip, thus realizing the advantageous effects of enabling quick and convenient erasing of handwritings as well as presenting a good consistency with the subsequent writing actions.

## Description

### BACKGROUND OF THE INVENTION

### 1. FIELD OF THE INVENTION

The present invention relates to a pen for writing, and more particularly to a gel-ink pen capable of erasing handwriting.

### 2. DESCRIPTION OF RELATED ART

Typically, existing gel-ink pens can not erase the handwritings that have been written on papers. A white-out fluid will have to be used to dash out the erroneous handwritings or the gel-ink pen is continually used to cross out the erroneous handwritings. Such a processing will leave smears on the papers, making the whole article not clean and tidy enough, while still occupying the positions of erroneous handwritings. Moreover, currently, for pupils who are experiencing a transition of use from a pencil that can erase handwritings to a gel-ink pen that cannot erase handwritings, they might get unaccustomed to such a change since the wrongly written characters cannot be erased, which would be adverse to their enthusiasm in writing with a gel-ink pen to some extent.

Currently in the market, there is a gel-ink pen that can erase handwritings, the principle of which is explained as follows: the components of the ink is processed so that the ink consists of three components: a chromogenic material, a color developing agent and a color-changing temperature regulating agent. At normal temperatures, the chromogenic material is bonded with the color developing agent to generate a color. However, when the temperature rises above a certain critical temperature, the color-changing temperature regulating agent will function to stop the bond of the chromogenic material and the color developing agent so as to make the color disappear, which will not be restored even at normal temperatures.

The above-described gel-ink pen is provided with a rubber head at the other end of the gel-ink pen opposite to the end where the pen tip is disposed, that is, the rubber head is provided at a tail portion of the pen. The rubber head is used to generate heat by friction with the paper. When the friction temperature rises above a certain critical temperature, the handwriting of ink becomes transparent so that it looks like the handwriting has disappeared. Using this principle, the function of writing and the function of erasing handwriting can be integrated onto the same pen. Unlike erasing pencil handwritings, no eraser crumbs will be generated. This is also distinguished from white-out fluid having chemical characteristics. Writing can be continued at the position at which erasing is performed after erasing, which is paper-saving and environment protective. However, such current gel-ink pen capable of erasing handwriting has the rubber head disposed at a tail portion of the gel-ink pen. When it is required to erase handwriting, writing is firstly stopped, and then the tail portion of the pen is rotated to face the side of paper to perform erasing. After erasing is completed, the tail portion is rotated back so that writing can be continued. Thus, the operation is not flexible and convenient enough.

### 3. BRIEF SUMMARY OF THE INVENTION

In order to overcome the disadvantages of the prior art, the present invention provides a gel-ink pen capable of erasing handwriting, wherein a rubber head for erasing handwriting is disposed at the side of pen tip so that erasing of handwriting is made more convenient and speedy, thus presenting a good consistency with the subsequent writing actions.

The following technical solutions are adopted by the invention in order to realize the above object of the invention.

A gel-ink pen capable of erasing handwriting comprises a pen holder, in which a pen refill with a pen tip is disposed, the pen tip capable of extending out of the head portion of the pen holder for writing, and a rubber head capable of erasing handwriting provided at the side of the head portion of the pen holder near the pen tip.

Further, the gel-ink pen further comprises a button for controlling the pen tip of the gel-ink pen to protrude out of and retract into the pen holder, and the button is disposed at a tail portion of the pen holder or on the pen holder.

Further, the pen holder comprises an upper pen holder and a lower pen holder, and the button is disposed on the lower pen holder.

In the above-described technical solution according to the invention, the rubber head is provided at the side of the head portion of the pen holder near the pen tip, thus realizing the advantageous effects of enabling quick and convenient erasing of handwritings as well as presenting a good consistency with the subsequent writing actions.

### 4. BRIEF DESCRIPTION OF THE DRAWINGS

FIG. 1 shows a perspective assembly view of a gel-ink pen capable of erasing handwriting according to the invention; and
FIG. 2 shows a perspective exploded view of a gel-ink pen capable of erasing handwriting according to the invention.

### Notes of reference signs:

- pen holder: 1
- upper pen holder: 2
- lower pen holder: 3
- rubber head: 4
- pen refill: 5
- pen tip: 51
- button: 6
- spring: 7
- gel-ink pen: 10

### 5. DETAILED DESCRIPTION OF THE PREFERRED EMBODIMENT

The invention will be further described below with reference to the accompanying drawings.

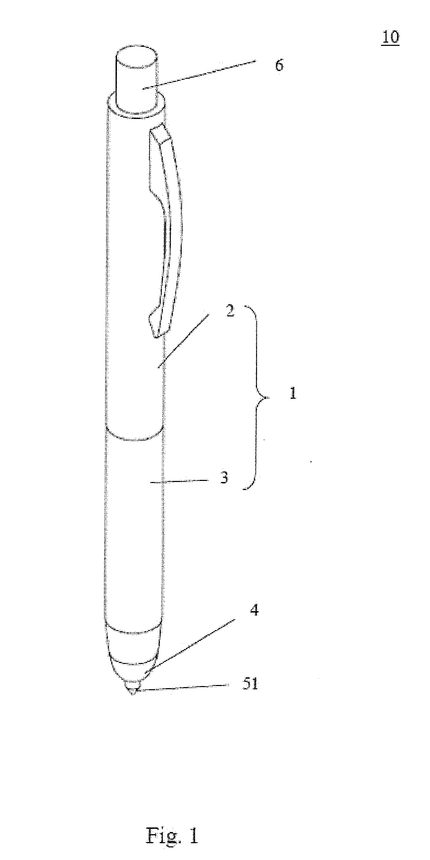

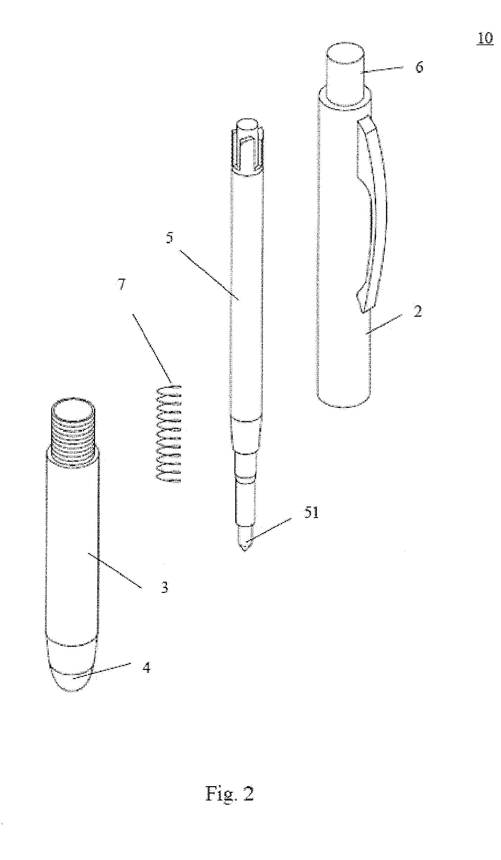

With reference to Figs. 1 and 2, the gel-ink pen 10 capable of erasing handwriting comprises a pen holder 1, a rubber head 4 connected to a head portion of the pen holder 1, a pen refill 5, a button 6 and a spring 7. The pen holder 1 comprises an upper pen holder 2 and a lower pen holder 3. The rubber head 4 is connected to the lower pen holder 3. The material of the rubber head 4 is a known thermoplastic rubber (TPR). The TPR is a material having both the characteristic of rubber and the characteristic of thermoplastic, i.e., a polymeric material which exhibits an elasticity of rubber at normal temperatures, and can also be plasticized at higher temperatures. The lower portion of the pen refill 5 is a pen tip 51 for writing. The lower portion of the pen refill 5 is sleeved inside of the spring 7 and disposed inside the lower pen holder 3. Then, the pen refill 5 is sleeved inside the upper pen holder 2, and the upper pen holder 2 and the lower pen holder 3 are fixed by a rotational mounting using the threads between the lower pen holder 3 and the upper pen holder 2. Pressing the button 6 can control the pen tip 51 of the pen refill 5 to extend out of and retract into the lower pen holder 3.

In order to write, the button 6 is pressed so that the pen tip 51 extends out of the pen holder 1 for writing. When there is an error in handwriting, the button 6 is pressed so that the pen tip 51 is retracted back into the pen holder 1. Without any rotation of the pen, the rubber head 4 at the head portion of the pen holder 1 is directly used to perform a friction erasing operation on the erroneous handwritings. With the rise of temperature caused by friction, the erroneous handwriting is erased. Next, the button 6 is pressed again so that the pen tip 51 extends out of the pen holder 1 to continue writing.

In addition, the gel-ink pen capable of erasing handwriting according to the invention, as required by use, can be also provided in such a way that the button, which is used for controlling the pen tip of the gel-ink pen to protrude out of and retract into the pen holder, is disposed on the pen holder, in particular, on the lower pen holder. Such a provision makes the user's operation to retract the pen tip more convenient so as to perform erasing action. After the handwriting is erased, the user can also conveniently extend the pen tip out of the pen holder to continue writing.

The technical scope of the invention is not limited to the above description. Those skilled in the art can make various modifications and variations to the above embodiments without departing from the technical ideas of the invention, which should all be considered as falling within the scope of the invention.

## Claims

1. A gel-ink pen capable of erasing handwriting, comprising a pen holder, in which a pen refill with a pen tip is disposed, the pen tip capable of extending out of the head portion of the pen holder for writing, and a rubber head capable of erasing handwriting provided at the side of the head portion of the pen holder near the pen tip.

2. The gel-ink pen capable of erasing handwriting according to claim 1, wherein the gel-ink pen further comprises a button for controlling the pen tip of the gel-ink pen to protrude out of and retract into the pen holder, and the button is disposed at a tail portion of the pen holder or on the pen holder.

3. The gel-ink pen capable of erasing handwriting according to claim 2, wherein the pen holder comprises an upper pen holder and a lower pen holder, and the button is disposed on the lower pen holder.

4. The gel-ink pen capable of erasing handwriting according to claim 3, wherein the rubber head is connected to the lower pen holder and the material of the rubber head is thermoplastic rubber.
